# EUROPEAN PATENT SPECIFICATION

(11) **EP 3 809 569 B1**
(45) Date of publication and mention of the grant of the patent: **22.02.2023**
(21) Application number: 19306340.1
(22) Date of filing: 15.10.2019
(51) Int. Cl.: H02M 1/12, H02M 1/00

(54) **CHOKE COIL WITH VARIABLE INDUCTANCE**
DROSSELSPULE MIT VARIABLER INDUKTANZ
BOBINE D'ARRÊT À INDUCTANCE VARIABLE

(43) Date of publication of application: 21.04.2021
(73) Proprietor: Schneider Toshiba Inverter Europe SAS, 27120 Pacy sur Eure (FR)
(72) Inventor: MESSAOUDI, Mehdi, 34420 VILLENEUVE LES BEZIERS (FR); ALLAERT, Yves-Laurent, 91800 BRUNOY (FR)
(74) Representative: Lavoix

(56) References cited:
- WO-A1-2018/061554
- JP-A- 2008 072 778
- JP-B2- 6 282 378
- US-A1- 2010 270 942

## Description

### TECHNICAL FIELD

The present disclosure more generally relates to methods and devices for improving operation of choke coils for alternating current power systems.

### BACKGROUND

Power conversion circuits used in alternating current (AC) power systems, such as in AC motor drive systems, usually comprise an inductor element, such as a choke coil, configured to filter unwanted frequency components from electrical currents (e.g., to block higher frequencies and eliminate high-order harmonics), for example to reduce ripple currents in pulsed width modulation (PWM) converters.

Examples of power conversion circuits are disclosed in the following documents: JP 6282378 B2, JP 2008/072778 A and WO 2018/061554 A1.

The ability of a choke coil to reduce ripple currents usually depends on its inductance value. The larger the inductance, the more effective the choke coil is for a given current value at a given frequency. However, the choke coil also becomes bulkier and more expensive to manufacture.

In some applications, such as high power converters, currents may fluctuate over wide ranges during operation. The choke coil may become ineffective if alternating currents exceed the coil's rated current value.

However, dimensioning the choke coil based on the highest permissible alternating current amplitude is not always feasible, as it would result in an oversized choke coil and a less efficient converter. Similarly, using multiple independent choke coils, each rated for a specific current value, would be overly expensive and would require too much space in the converter.

There is therefore a need for improved choke coils for alternating current power systems, such as power conversion systems.

### SUMMARY

According to an aspect, the invention is an electrical device according to claim 1.

According to some further aspects, the invention may comprise one or more of the following features, considered alone or according to all possible combinations:
The control unit is configured to open or close one or more of the switches for selectively connecting at least two of said coils in series or in parallel between the input and output terminals.

The control unit is configured to:
determine a target circuit configuration, depending on the measured current value, the switches being opened or closed to match the determined target circuit configuration.

Determining the target circuit configuration comprises:
comparing the measured current value to a predefined threshold;
determining that the measured current value belongs to a predefined current value interval;
acquiring a target circuit configuration associated to said predefined current value interval.

The switches are transistors, preferably high-speed power transistors, such as gallium nitride transistors or silicon carbide transistors.

The control unit is further configured to:
automatically determine a zero current crossing event based on measured current values;
open or close the switches only during a zero current crossing event.

The control unit is further configured to power the auxiliary coil only during a zero current crossing event.

The electrical circuit comprises:
a first circuit branch comprising the first coil, the second coil and a first switch, connected in series,
a second circuit branch comprising a second switch and connected in parallel with the first coil and the first switch,
a third circuit branch comprising a third switch and connected in parallel with the first switch and the second coil.

According to another aspect, a power conversion circuit comprises, for each phase of the power conversion circuit, an electrical device as previously defined.

According to yet another aspect, the invention is a method according to claim 9.

### BRIEF DESCRIPTION OF THE DRAWINGS

The invention will be better understood upon reading the following description, provided solely as an example, and made in reference to the appended drawings, in which:
Fig. 1 is a simplified diagram of a power conversion circuit according to one or more embodiments of the invention;
Fig. 2 is a simplified diagram of an electrical circuit according to one or more embodiments of the invention;
Fig. 3 is a simplified diagram of an auxiliary electrical circuit according to one or more embodiments of the invention;
Fig. 4 is a flow chart of a method for operating the electrical circuit of Fig. 2 according to one or more embodiments of the invention.

### DETAILED DESCRIPTION OF SOME EMBODIMENTS

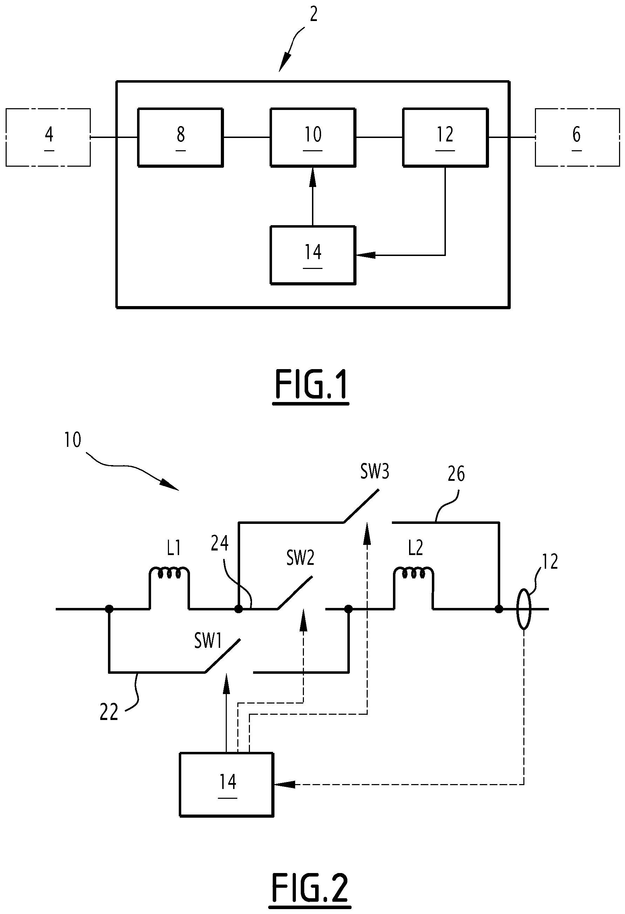

On Fig. 1 there is illustrated an alternating current (AC) power system 2, such as a power converter.

For example, the power converter 2 is configured to be connected to a first electrical device 4, such as a power source, and to a second electrical device 6, such as an electrical load.

As illustrated on Fig. 1, the converter 2 may include power conversion elements 8.

The converter 2 includes an electrical device 10, such as an inductor-based device, configured to filter unwanted frequency components from alternating electrical currents.

In what follows, to simplify the description, the device 10 is shown associated to a single electrical phase of the converter 2, although in practice each electrical phase of the converter 2 may be associated to an electrical device 10.

For example, a three-phase converter 2 includes three devices 10, each associated to a single phase.

An exemplary embodiment of the device 10 is illustrated on Figs. 1 and 2.

The device 10 comprises an input terminal and an output terminal, configured to be electrically connected to other components of the power converter 2.

The device 10 comprises at least a first coil L1 and a second coil L2. The coils, or windings, may comprise a metal wire wound around a coil holder. In this example, coils L1 and L2 are single-phase coils.

In some alternative embodiments not described henceforth, the device 109 may comprise more than two coils.

The device 10 comprises an electrical circuit for connecting at least one of said coils between the input terminal and the output terminal.

The electrical circuit includes a plurality of switches SW1, SW2, SW3 and may include one or more electrical conductors.

Each switch SW1, SW2 and SW3 can be selectively and reversibly switched between an open state and a closed state.

Preferably, the switches SW1, SW2 and SW3 are high-speed power transistors.

For example, the switches SW1, SW2, SW3 are transistors, such as insulated gate bipolar transistors (IGBT), or bipolar transistors, or field effect transistors, such as metal oxide semiconductor field effect transistors (MOSFET), or any appropriate power transistor technology.

According to preferred embodiments, the transistors are gallium nitride (GaN) transistors, or silicon carbide (SiC) transistors.

In some alternative embodiments, the device 10 may comprise a different number of switches.

The device 10 further comprises a sensor 12 configured to measure a value of an electrical current circulating between the input and output terminals.

For example, the sensor 12 is a current sensor, such as a Rogowski coil, or a shunt sensor, or any suitable current sensor.

The device 10 also includes a control unit 14 coupled to the sensor 12 and to the switches SW1, SW2, SW3.

For example, the control unit 14 is connected to the sensor 12 and to the switches SW1, SW2, SW3 by cables or wires.

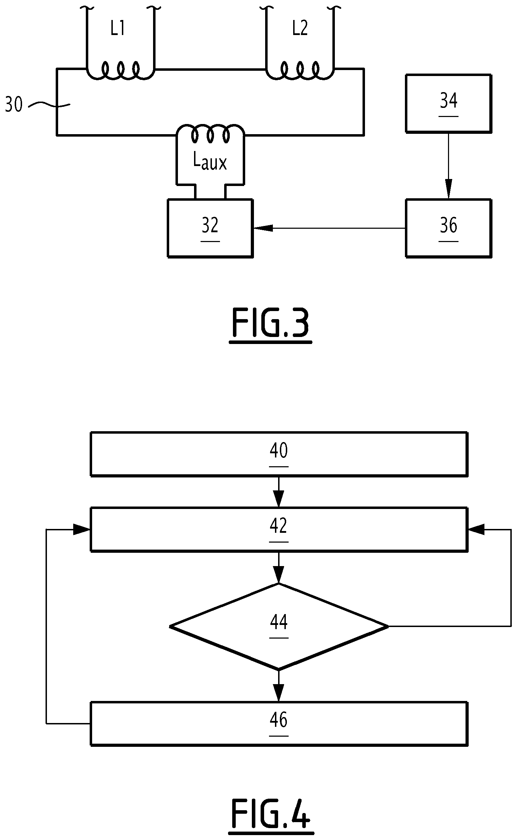

According to many embodiments, the control unit 14 comprises electronic circuitry, and may preferentially include a processor and a memory, e.g. for storing executable instructions and/or software code and/or a computer program configured to implement a method as described in reference to Fig. 4 when executed by the processor.

For example, the control unit 14 may include a microcontroller, or a microprocessor, or an application-specific integrated circuit (ASIC), or a programmable logic circuit such as a field programmable gate array (FPGA), or any suitable control circuitry.

The memory may include volatile memory elements, such as random access memory (RAM) or non-volatile memory elements, such as Flash, read-only memory (ROM), erasable memory (EEPROM), or the like.

The control unit 14 may include an input connection for receiving data from the sensor 12. Said input may include or be coupled to an analog to digital (ADC) converter.

The control unit 14 is able to selectively order a commutation of any of the switches SW1, SW2 and SW3 between open and closed states by outputting control signals to said switches SW1, SW2 and SW3, e.g., by applying a voltage on a transistor gate electrode.

According to many embodiments, the control unit 14 is configured to automatically open or close one or more of the switches SW1, SW2 and SW3 for connecting one or more coils L1, L2 between the input terminal and the output terminal, or for disconnecting one or more coils L1, L2 from the input terminal or the output terminal, so that the total inductance between the input terminal and the output terminal may reach a desired value.

For example, the control unit 14 is configured to open or close one or more of the switches for selectively connecting at least two of said coils L1, L2 in series or in parallel between the input and output terminals.

In the exemplary embodiment depicted on Fig. 2, the electrical circuit comprises three circuit branches, noted 22, 24 and 26 in what follows and named first circuit branch, second circuit branch and third circuit branch.

For example, the first coil L1, the second coil L2 and the first switch SW2 are connected in series by several electrical conductors to form the first circuit branch 24. For example, the switch SW2 is connected between the first and second coils L1, L2.

The second circuit branch 22 comprises the second switch SW1 and is connected in parallel with the first coil L1 and the first switch SW2.

The third circuit branch 26 comprises the third switch SW3 and is connected in parallel with the first switch SW2 and the second coil L2.

The electrical circuit may thus be reconfigured to provide several different current paths between the input and output terminals, depending on the respective state (open or closed) of each switch SW1, SW2 and SW3.

For example, in a first configuration, the first switch SW2 is open while the second and third switches SW1 and SW3 are closed: the first and second coils L1 and L2 are then connected in parallel between the input and output terminals.

In a second configuration, the first switch SW2 is closed while the second and third switches SW1 and SW3 are open: the first and second coils L1 and L2 are then connected in series between the input and output terminals.

In a third configuration, the first and second switches SW2 and SW1 are open while the third switch SW3 is closed: only the first coil L1 is then connected between the input and output terminals. The second coil L2 is disconnected from the input terminal and is bypassed by the third circuit branch 26.

In a fourth configuration, the first and third switches SW2 and SW3 are open while the second switch SW1 is closed: only the second coil L2 is then connected between the input and output terminals. The first coil L1 is disconnected from the output terminal and is bypassed by the second circuit branch 22.

In some embodiments, additional transitional circuit configuration may be defined, for example in which the coils L1 and L2 are temporarily disconnected from the input and output terminals during switching between different stationary configurations.

However, these examples and are given for explanatory purposes and are not necessarily limiting, as many other circuit configurations can be defined in alternative embodiments, for example in embodiments where different circuit topologies are selected, or where the circuit includes more than two coils and/or includes a different number of switches.

The control unit 14 is programmed to select a specific circuit configuration in order to adapt the device's inductance to amplitude variations of the input alternating current.

To reach the desired inductance value, the control unit 14 may automatically select a circuit configuration associated to the measured current value. In other embodiments, the control unit 14 may determine a target inductance value, for example based on the measured current value, and then automatically chooses an adequate circuit configuration so that the total inductance of the device 10 matches (as closely as possible, if not exactly) the target inductance value.

To this end, the control unit 14 is configured to measure one or more current values using the sensor 12, and to determine a target inductance value depending on the measured current value.

For example, one or more predefined target inductance values are defined, each corresponding to a circuit configuration and each associated to a current threshold values or to a range of current values.

In some embodiments, the control unit 14 is configured to automatically compare the measured current value to a predefined threshold, then to determine a predefined current value range, and then to acquire a target inductance value or a target circuit configuration associated to said predefined current value range.

In an exemplary embodiment provided for illustrative purposes, two current thresholds I1 and I2 are defined.

A first circuit configuration, in which coils L1 and L2 are connected in series, is associated to a range of current values comprised between zero amperes and the threshold I2.

A second circuit configuration, in which only coil L1 is connected, is associated to a range of current values comprised between the threshold I2 and the threshold I1.

A third circuit configuration, in which coils L1 and L2 are connected in parallel, is associated to a range of current values higher than the threshold I2.

The control unit 14 compares the measured values to one or more of the thresholds 11, I2 to determine whether the measured value belongs to any of said current ranges, and then determines the corresponding circuit configuration.

In many embodiments, the control unit 14 is further configured to automatically determine a zero current crossing event based on measured current values, and to open or close the switches (e.g., to switch the circuit between two different configurations) only during a zero current crossing event. Using a zero current crossing strategy is useful for smoothing the transition between different configurations.

For example, a zero current crossing event is reached when the alternating currents reaches a zero value, or is close to a zero value.

According to some examples, to automatically detect a zero current crossing event, the control unit 14 may rely on the current values measured by the sensor 12, or may rely on a specific zero current crossing detection module.

For example, the control unit 14 may be configured to delay switching the transistors SW1, SW2, SW3 until a zero current crossing event is detected.

According to the invention, as illustrated on Fig. 3, the device 10 further includes a magnetic core 30 and an auxiliary coil Lₐᵤₓ.

The auxiliary coil Lₐᵤₓ is coupled to the magnetic core 30. The first coil L1 and the second coil L2 are coupled to the magnetic core 30. For example, said coils are wound around the magnetic core 30.

The device 10 further includes a drive circuit 32 connected to auxiliary coil Lₐᵤₓ and configured to power the auxiliary coil Lₐᵤₓ.

The control unit 14 is further configured to power the auxiliary coil Lₐᵤₓ, using the drive circuit 32, when opening or closing said switches SW1, SW2, SW3.

When the auxiliary coil Lₐᵤₓ is activated by the control circuit (e.g., by applying a suitable voltage to the auxiliary coil with the drive circuit 32), a magnetic flux is generated in the magnetic core 30. This can be used to smooth the transitions between different circuit configurations, for example when coils are connected to or disconnected from a current path in which the alternating current is flowing.

For example, a detection module 34 or a current probe 34 automatically detects when a transition is occurring or is about to occur and, in response, sends a signal to a processor 36. The module 34 and the processor 36 may be implemented by the control unit 14.

Preferably, the auxiliary coil Lₐᵤₓ may be activated during zero current crossing events.

The auxiliary coil Lₐᵤₓ may be deactivated (e.g., by stopping the drive circuit 32) when the transition is over.

Owing to embodiments described above, the device 10 acts as a variable impedance choke coil, in which the inductance is automatically adjusted depending on the alternating current amplitude according to a predefined set of rules. The electrical circuit is reconfigured on the fly by adding or removing coils, or reconnecting coils in different configurations, e.g. in series or in parallel, without having to stop the power converter.

The device 10 can thus operate over a wide range of alternating current values with only a limited number of relatively small coils. As a result, the device 10 is small and more compact and is less expensive to manufacture.

An exemplary method for operating the device 10 is now described in reference to the flow chart of Fig. 4.

The method begins at step 40.

At step 42, the control unit 14 measures a current value (e.g., current amplitude) using sensor 12.

For example, this measurement is repeated periodically.

At step 44, the control unit 14 automatically determines a target circuit configuration depending on the measured current value.

For example, the measured current value is automatically compared to a predefined threshold stored in memory.

The control unit 14 then determines whether the measured current value belongs to a predefined current value interval and determines a target configuration, for example by acquiring a target inductance value associated to said predefined current value interval, for example from a lookup table stored in memory.

If the inductance or the circuit configuration does not need to be changed, then the electrical circuit is left in its current configuration. The method returns to step 42.

Step 44 may be repeated periodically, for example each time a current value is measured.

If the target circuit configuration determined during step 44 is different from the current circuit configuration, for example because the target inductance value is found to be different from the current inductance value, then, at step 46, the control unit 14 automatically sets the electrical circuit in a new predefined configuration, by opening or closing one or more of the switches SW1, SW2, SW3, depending on the determined target circuit configuration.

For example, only one coil may be connected between the input terminal and the output terminal, or two or more coils may be connected between the input terminal and the output terminal, either in parallel, or in series, or any combination thereof permitted by the circuit topology.

Optionally, the circuit may be temporarily placed in a transitional state before reaching the predefined configuration, e.g. to temporarily route the current path away from one or more coil or witches when said switches are switching between open and closed states.

During these transitions, the auxiliary coil Lₐᵤₓ is activated when the switches SW1, SW2 and SW3 switch, in order to avoid abrupt magnetic flux variations in coils L1, L2 and to smooth the transitions between different configurations.

The embodiments and alternatives described above may be combined with each other in order to generate new embodiments of the invention.

## Claims

1. An electrical device (10), comprising:
at least a first coil (L1) and a second coil (L2);
an input terminal and an output terminal;
an electrical circuit for connecting at least one of the coils between the input terminal and the output terminal, said electrical circuit including a plurality of switches (SW1, SW2, SW3);
a sensor (12) configured to measure a value of an electrical current circulating between the input and output terminals;
a control unit (14) coupled to the sensor and to the switches;
wherein said control unit (14) is configured to:
measure a current value (42) using said sensor (12);
automatically open or close one or more of the switches (46), depending on the measured current value, to adapt the device's inductance by connecting one or more of the coils (L1, L2) between the input terminal and the output terminal or disconnecting one or more of the coils (L1, L2) from the input terminal or the output terminal;
**characterized in that** the electrical device further comprises:
a magnetic core (30), said at least first coil (L1) and second coil (L2) being coupled to said magnetic core;
an auxiliary coil (Lₐᵤₓ), coupled to said magnetic core and connected to a drive circuit (32);
and **in that** the control unit (14) is further configured to power the auxiliary coil (Lₐᵤₓ) with the drive circuit (32), when opening or closing said switches (SW1, SW2, SW3), to smooth the transitions between different circuit configurations.

2. The electrical device of claim 1, wherein the control unit is configured to open or close one or more of the switches (46) for selectively connecting at least two of said coils in series or in parallel between the input and output terminals.

3. The electrical device according to any previous claim, wherein the control unit (14) is configured to:
determine a target circuit configuration (44), depending on the measured current value, the switches being opened or closed (46) to match the determined target circuit configuration.

4. The electrical device according to claim 3, wherein determining the target circuit configuration (44) comprises:
comparing the measured current value to a predefined threshold;
determining that the measured current value belongs to a predefined current value interval;
acquiring a target circuit configuration associated to said predefined current value interval.

5. The electrical device according to any previous claim, wherein the switches (SW1, SW2, SW3) are transistors, preferably high-speed power transistors, such as gallium nitride transistors or silicon carbide transistors.

6. The electrical device according to any previous claim, wherein the control unit (14) is further configured to:
automatically determine a zero current crossing event based on measured current values;
open or close the switches (46) only during a zero current crossing event.

7. The electrical device according to any previous claim, wherein the electrical circuit comprises:
a first circuit branch (24) comprising the first coil (L1), the second coil (L2) and a first switch (SW2), connected in series,
a second circuit branch (22) comprising a second switch (SW1) and connected in parallel with the first coil (L1) and the first switch (SW2),
a third circuit branch (26) comprising a third switch (SW3) and connected in parallel with the first switch (SW2) and the second coil (L2).

8. An alternating current power system (2) comprising, for each phase of the power system, an electrical device (10) according to any previous claim.

9. A method for operating an electrical device comprising:
at least a first coil (L1) and a second coil (L2);
an input terminal and an output terminal;
an electrical circuit for connecting at least one of the coils between the input terminal and the output terminal, said electrical circuit including a plurality of switches (SW1, SW2, SW3);
a sensor (12) configured to measure a value of an electrical current circulating between the input and output terminals;
a control unit (14) coupled to the sensor and to the switches;
wherein said method comprises:
measuring a current value (42) using said sensor (12);
automatically opening or closing one or more of the switches (46), depending on the measured current value, to adapt the device's inductance by connecting one or more of the coils (L1, L2) between the input terminal and the output terminal or disconnecting one or more of the coils (L1, L2) from the input terminal or the output terminal;
**characterized in that** the electrical device further comprises:
a magnetic core (30), said at least first coil (L1) and second coil (L2) being coupled to said magnetic core;
an auxiliary coil (Lₐᵤₓ), coupled to said magnetic core and connected to a drive circuit (32);
and **in that** the method further comprises: powering the auxiliary coil (Lₐᵤₓ) with the drive circuit (32), when opening or closing said switches (SW1, SW2, SW3), to smooth the transitions between different circuit configurations.

## Patentansprüche

1. Elektrische Vorrichtung (10), umfassend:
mindestens eine erste Spule (L1) und eine zweite Spule (L2);
einen Eingangsanschluss und einen Ausgangsanschluss;
eine elektrische Schaltung zum Verbinden mindestens einer der Spulen zwischen dem Eingangsanschluss und
dem Ausgangsanschluss, wobei die elektrische Schaltung eine Vielzahl von Schaltern (SW1, SW2, SW3) beinhaltet;
einen Sensor (12), der konfiguriert ist, um einen Wert eines elektrischen Stroms zu messen, der zwischen dem Eingangs- und dem Ausgangsanschluss zirkuliert;
eine Steuereinheit (14), die mit dem Sensor und den Schaltern verbunden ist;
wobei die Steuereinheit (14) zu Folgendem konfiguriert ist:
Messen eines Stromwerts (42) unter Verwendung des Sensors (12);
automatisches Öffnen oder Schließen eines oder mehrerer Schalter (46) abhängig von dem gemessenen Stromwert, um die Induktivität der Vorrichtung anzupassen, indem eine oder mehrere der Spulen (L1, L2) zwischen dem Eingangsanschluss und dem Ausgangsanschluss verbunden werden oder eine oder mehrere der Spulen (L1, L2) von dem Eingangsanschluss oder dem Ausgangsanschluss getrennt werden;
**dadurch gekennzeichnet, dass** die elektrische Vorrichtung ferner Folgendes umfasst:
einen Magnetkern (30), wobei mindestens die erste Spule (L1) und die zweite Spule (L2) mit dem Magnetkern verbunden sind;
eine Hilfsspule (Lₐᵤₓ), die mit dem Magnetkern gekoppelt und mit einer Treiberschaltung (32) verbunden ist;
und dass die Steuereinheit (14) ferner konfiguriert ist, um die Hilfsspule (Lₐᵤₓ) mit der Treiberschaltung (32) zu versorgen, wenn die Schalter (SW1, SW2, SW3) öffnen oder schließen, um die Übergänge zwischen verschiedenen Schaltungskonfigurationen zu glätten.

2. Elektrische Vorrichtung nach Anspruch 1, wobei die Steuereinheit konfiguriert ist, um einen oder mehrere der Schalter (46) zu öffnen oder zu schließen, um selektiv mindestens zwei der Spulen in Reihe oder parallel zwischen dem Eingangs- und dem Ausgangsanschluss zu schalten.

3. Elektrische Vorrichtung nach einem der vorherigen Ansprüche, wobei die Steuereinheit (14) zu Folgendem konfiguriert ist:
Bestimmen einer Soll-Schaltungskonfiguration (44) abhängig von dem gemessenen Stromwert, wobei die Schalter geöffnet oder geschlossen werden (46), um der bestimmten Soll-Schaltungskonfiguration zu entsprechen.

4. Elektrische Vorrichtung nach Anspruch 3, wobei ein Bestimmen der Soll-Schaltungskonfiguration (44) Folgendes umfasst:
Vergleichen des gemessenen Stromwertes mit einem vordefinierten Schwellenwert;
Bestimmen, dass der gemessene Stromwert zu einem vordefinierten Stromwertintervall gehört;
Erfassen einer Zielschaltkreiskonfiguration, die mit dem vordefinierten Stromwertintervall assoziiert ist.

5. Elektrische Vorrichtung nach einem der vorherigen Ansprüche, wobei die Schalter (SW1, SW2, SW3) Transistoren sind, vorzugsweise Hochgeschwindigkeits-Leistungstransistoren, wie beispielsweise Galliumnitrid-Transistoren oder Siliziumkarbid-Transistoren.

6. Elektrische Vorrichtung nach einem der vorherigen Ansprüche, wobei die Steuereinheit (14) ferner zu Folgendem konfiguriert ist:
automatisches Bestimmen eines Nullstrom-Durchgangsereignis basierend auf gemessenen Stromwerten;
Öffnen oder Schließen der Schalter (46) nur während eines Nullstrom-Durchgangsereignisses.

7. Elektrische Vorrichtung nach einem der vorherigen Ansprüche, wobei die elektrische Schaltung Folgendes umfasst:
einen ersten Schaltungszweig (24), umfassend die erste Spule (L1), die zweite Spule (L2) und einen ersten Schalter (SW2), die in Reihe geschaltet sind,
einen zweiten Stromkreiszweig (22), umfassend einen zweiten Schalter (SW1), und der parallel zu der ersten Spule (L1) und dem ersten Schalter (SW2) geschaltet ist,
einen dritten Stromkreiszweig (26), umfassend einen dritten Schalter (SW3), und der parallel zu dem ersten Schalter (SW2) und der zweiten Spule (L2) geschaltet ist.

8. Wechselstromnetz (2), umfassend für jede Phase des Stromsystems eine elektrische Vorrichtung (10) nach einem der vorherigen Ansprüche.

9. Verfahren zum Betrieb einer elektrischen Vorrichtung, umfassend:
mindestens eine erste Spule (L1) und eine zweite Spule (L2);
einen Eingangsanschluss und einen Ausgangsanschluss;
eine elektrische Schaltung zum Verbinden mindestens einer der Spulen zwischen dem Eingangsanschluss und
dem Ausgangsanschluss, wobei die elektrische Schaltung eine Vielzahl von Schaltern (SW1, SW2, SW3) beinhaltet;
einen Sensor (12), der konfiguriert ist, um einen Wert eines elektrischen Stroms zu messen, der zwischen dem Eingangs- und dem Ausgangsanschluss zirkuliert;
eine Steuereinheit (14), die mit dem Sensor und den Schaltern verbunden ist;
wobei das Verfahren Folgendes umfasst:
Messen eines Stromwerts (42) unter Verwendung des Sensors (12);
automatisches Öffnen oder Schließen eines oder mehrerer Schalter (46) abhängig von dem gemessenen Stromwert, um die Induktivität der Vorrichtung anzupassen, indem eine oder mehrere der Spulen (L1, L2) zwischen dem Eingangsanschluss
und dem Ausgangsanschluss verbunden werden oder eine oder mehrere der Spulen (L1, L2) von dem Eingangsanschluss oder dem Ausgangsanschluss getrennt werden;
**dadurch gekennzeichnet, dass** die elektrische Vorrichtung ferner Folgendes umfasst:
einen Magnetkern (30), wobei mindestens die erste Spule (L1) und die zweite Spule (L2) mit dem Magnetkern verbunden sind;
eine Hilfsspule (Lₐᵤₓ), die mit dem Magnetkern gekoppelt und mit einer Treiberschaltung (32) verbunden ist;
und dass das Verfahren ferner Folgendes umfasst: Versorgen der Hilfsspule (Lₐᵤₓ) mit der Treiberschaltung (32) mit Strom, wenn die Schalter (SW1, SW2, SW3) öffnen oder schließen, um die Übergänge zwischen verschiedenen Schaltungskonfigurationen zu glätten.

## Revendications

1. Dispositif électrique (10), comprenant :
au moins une première bobine (L1) et une seconde bobine (L2) ;
une borne d'entrée et une borne de sortie ;
un circuit électrique pour connecter au moins une des bobines entre la borne d'entrée et
la borne de sortie, ledit circuit électrique comprenant une pluralité de commutateurs (SW1, SW2, SW3) ;
un capteur (12) configuré pour mesurer une valeur d'un courant électrique circulant entre les bornes d'entrée et de sortie ;
une unité de commande (14) couplée au capteur et aux commutateurs ;
dans lequel ladite unité de commande (14) est configurée pour :
mesurer une valeur de courant (42) en utilisant ledit capteur (12) ;
ouvrir ou fermer automatiquement un ou plusieurs des commutateurs (46), en fonction de la valeur de courant mesurée, pour adapter l'inductance du dispositif en connectant une ou plusieurs des bobines (L1, L2) entre la borne d'entrée et la borne de sortie ou en déconnectant une ou plusieurs des bobines (L1, L2) de la borne d'entrée ou de la borne de sortie ;
**caractérisé en ce que** le dispositif électrique comprend en outre :
un noyau magnétique (30), lesdites au moins première bobine (L1) et seconde bobine (L2) étant couplées audit noyau magnétique ;
une bobine auxiliaire (Lₐᵤₓ), couplée audit noyau magnétique et connectée à un circuit de commande (32) ;
et **en ce que** l'unité de commande (14) est en outre configurée pour alimenter la bobine auxiliaire (Lₐᵤₓ) avec le circuit de commande (32), lors de l'ouverture ou de la fermeture desdits commutateurs (SW1, SW2, SW3), pour lisser les transitions entre différentes configurations de circuit.

2. Dispositif électrique selon la revendication 1, dans lequel l'unité de commande est configurée pour ouvrir ou fermer un ou plusieurs des commutateurs (46) pour connecter sélectivement au moins deux desdites bobines en série ou en parallèle entre les bornes d'entrée et de sortie.

3. Dispositif électrique selon une quelconque revendication précédente, dans lequel l'unité de commande (14) est configurée pour :
déterminer une configuration de circuit cible (44), en fonction de la valeur de courant mesurée, les commutateurs étant ouverts ou fermés (46) pour correspondre à la configuration de circuit cible déterminée.

4. Dispositif électrique selon la revendication 3, dans lequel la détermination de la configuration du circuit cible (44) comprend :
la comparaison de la valeur de courant mesurée à un seuil prédéfini ;
la détermination de l'appartenance de la valeur de courant mesurée à un intervalle de valeur de courant prédéfini ;
l'acquisition d'une configuration de circuit cible associée audit intervalle de valeur de courant prédéfini.

5. Dispositif électrique selon une quelconque revendication précédente, dans lequel les commutateurs (SW1, SW2, SW3) sont des transistors, de préférence des transistors de puissance à grande vitesse, tels que des transistors au nitrure de gallium ou des transistors au carbure de silicium.

6. Dispositif électrique selon une quelconque revendication précédente, dans lequel l'unité de commande (14) est en outre configurée pour :
déterminer automatiquement un événement de passage à zéro du courant sur la base des valeurs de courant mesurées ;
ouvrir ou fermer les interrupteurs (46) uniquement pendant un événement de passage à zéro du courant.

7. Dispositif électrique selon une quelconque revendication précédente, dans lequel le circuit électrique comprend :
une première branche de circuit (24) comprenant la première bobine (L1), la seconde bobine (L2) et un premier commutateur (SW2), connectés en série,
une deuxième branche de circuit (22) comprenant un deuxième commutateur (SW1) et connectée en parallèle avec la première bobine (L1) et le premier commutateur (SW2),
une troisième branche de circuit (26) comprenant un troisième commutateur (SW3) et connectée en parallèle avec le premier commutateur (SW2) et la seconde bobine (L2).

8. Système d'alimentation en courant alternatif (2) comprenant, pour chaque phase du système d'alimentation, un dispositif électrique (10) selon une quelconque revendication précédente.

9. Procédé d'utilisation d'un dispositif électrique comprenant :
au moins une première bobine (L1) et une seconde bobine (L2) ;
une borne d'entrée et une borne de sortie ;
un circuit électrique pour connecter au moins une des bobines entre la borne d'entrée et
la borne de sortie, ledit circuit électrique comprenant une pluralité de commutateurs (SW1, SW2, SW3) ;
un capteur (12) configuré pour mesurer une valeur d'un courant électrique circulant entre les bornes d'entrée et de sortie ;
une unité de commande (14) couplée au capteur et aux commutateurs ;
dans lequel ledit procédé comprend :
la mesure d'une valeur de courant (42) en utilisant ledit capteur (12) ;
l'ouverture ou la fermeture automatique d'un ou plusieurs des commutateurs (46), en fonction de la valeur de courant mesurée, pour adapter l'inductance du dispositif en connectant une ou plusieurs des bobines (L1, L2) entre la borne d'entrée
et la borne de sortie ou en déconnectant une ou plusieurs des bobines (L1, L2) de la borne d'entrée ou de la borne de sortie ;
**caractérisé en ce que** le dispositif électrique comprend en outre :
un noyau magnétique (30), lesdites au moins première bobine (L1) et seconde bobine (L2) étant couplées audit noyau magnétique ;
une bobine auxiliaire (Lₐᵤₓ), couplée audit noyau magnétique et connectée à un circuit de commande (32) ;
et **en ce que** le procédé comprend en outre : l'alimentation de la bobine auxiliaire (Lₐᵤₓ) avec le circuit de commande (32) lors de l'ouverture ou de la fermeture desdits commutateurs (SW1, SW2, SW3), pour lisser les transitions entre différentes configurations de circuit.
